(19) Europäisches Patentamt
European Patent Office
Office européen des brevets

(11) Publication number: 0 296 473 B1

(12) EUROPEAN PATENT SPECIFICATION

(45) Date of publication of patent specification: 14.10.92

(51) Int. Cl.5: C08K 5/06, C08K 5/15, C08L 69/00

(21) Application number: 88109524.4

(22) Date of filing: 15.06.88

# (54) Gamma radiation resistant polycarbonate compositions.

(30) Priority: 26.06.87 US 67670

(43) Date of publication of application: 28.12.88 Bulletin 88/52

(45) Publication of the grant of the patent: 14.10.92 Bulletin 92/42

(84) Designated Contracting States: DE FR GB IT SE

(56) References cited:
EP-A- 0 228 525
US-A- 3 385 814

(73) Proprietor: MILES INC.
One Mellon Center 500 Grant Str.
Pittsburgh, PA 15219-2502(US)

(72) Inventor: Lundy, Charles E.
1014 Chestnut Ridge
Pittsburgh, PA 15205(US)
Inventor: Krishnan, Sivaram
1653 Little Meadow Road
Pittsburgh, PA 15241(US)
Inventor: Robbins, Gerald L.
206 Courtney Place
Wexford, PA 15090(US)
Inventor: Archey, Rick L.
333 Old Clairton Road
Pleasant Hills, PA 15236(US)

(74) Representative: Gremm, Joachim, Dr. et al
Bayer AG Konzernverwaltung RP Patente Konzern
W-5090 Leverkusen 1, Bayerwerk(DE)

EP 0 296 473 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Field of the Invention

The invention is directed to polycarbonate molding compositions and more particularly, to thermoplastic compositions resistant to gamma radiation.

### Summary of the Invention

The invention relates to thermoplastic polycarbonate molding compositions which are rendered resistant to gamma-radiation by incorporating therewith about 0.1 to about 10 percent by weight of a stabilizing agent selected from the group consisting of

I. 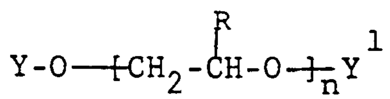 or

II. $YO-[(CH_2)_m-O]_n\ Y^1$

wherein R is a hydrogen or a halogen atom or a $C_1$-$C_{10}$-alkyl, $C_6$-$C_{10}$ aryl, $C_6$-$C_{18}$ arylalkyl or a $C_4$-$C_{10}$ cycloalkyl radical, n is an integer of at least 1 and in I Y and $Y^1$ are independently III, IV, V or VI hereafter defined, and in II Y and Y' independently are a hydrogen atom, an $C_6$-$C_{10}$ aryl, $C_1$-$C_{10}$ alkyl or a $C_6$-$C_{18}$ aralkyl radical or

III. 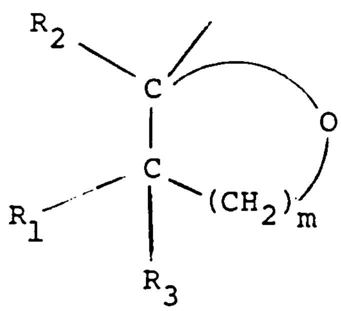 or

IV. 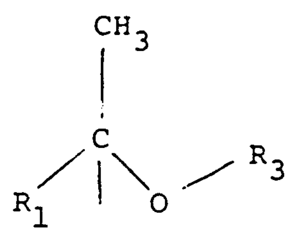

V. 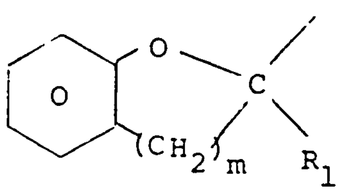 or VI. 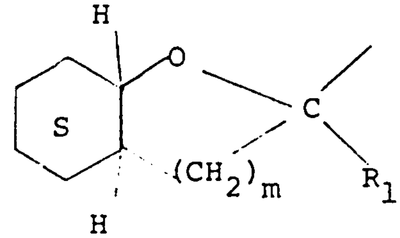

wherein m is 1 or 3-6, $R_1$, $R_2$ and $R_3$ independently are hydrogen atoms or a $C_1$-$C_{10}$ alkyl, $C_6$-$C_{10}$ aryl or a $C_6$-$C_{18}$ arylalkyl radical.

## BACKGROUND OF THE INVENTION

Because of its physical and mechanical properties polycarbonate resin was found to be eminently suitable for a variety of applications in the medical field. Applications which require sterilization by exposure to gamma radiation present a problem since polycarbonate tends to yellow and show increased haze. The art is noted to include U.S. Patent 4,624,972 which disclosed polycarbonate compositions resistant to gamma radiation containing an ester of an aromatic polycarboxylic acid. European Patent Application 152,012 disclosed a method for increasing the ionizing radiation resistance of polycarbonate by including in the composition a non-polymeric compound which is characterized by a strong oxidizing action and/or reaction at high reaction rate with active species such as E or OH radicals or hydrated electrons formed by ionizing radiation. U.S. Patent 4,451,691 disclosed a container prepared from a copolyester which has been modified with either a dimer acid or a dimer glycol. The copolyester is said to have an improved resistance to gamma radiation. Radiation stable polyolefin compositions have been disclosed in U.S. Patent 4,460,445.

According to EP-A-0 228 525 gamma radiation resistant carbonate polymer compositions are described having polyether polyols and the alkylethers thereof. This application is not prepublished.

According to US-Patent 3385 814 polycarbonate compositions are known, containing polyetherpolyols the endgroups of which are hydrogen, alkyl, aryl and arylalkyl, in a quantity of 10% to 100%, calculated on the quantity of dissolved polycarbonate. Polycarbonate compositions with these additives yield filaments and films with high crystallinity. But the US-Patent 3 385 814 does not give an incentive to use the particular end-capped polyether polyols according to instant invention to enhance the gamma resistance of polycarbonate moulding compositions, because the teaching of the US-Patent refers to a different problem.

## DETAILED DESCRIPTION OF THE INVENTION

The composition of the invention comprises a polycarbonate resin and a stabilizing agent in an amount sufficient to enhance the resistance of the resin to yellowness and to the formation of haze upon exposure to gamma radiation. Preferably, the composition contains about 0.1 to 10.0 percent of the stabilizing agent.

The polycarbonate resins useful in the practice of the invention are homopolycarbonates, copolycarbonates and terpolycarbonates or mixtures thereof. The polycarbonates generally have a weight average molecular weight of 10,000-200,000, preferably 20,000-80,000 and their melt flow rate, per ASTM D-1238 at 300°C, is about 1 to about 65 gm/10 min., preferably about 2-15 gm/10 min. They may be prepared, for example, by the known diphasic interface process from a carbonic acid derivative such as phosgene and dihydroxy compounds by polycondensation (see German Offenlegungsschriften 2,063,050; 2,063,052; 1,570,703; 2,211,956; 2,211,957 and 2,248,817; French Patent 1,561,518; and the monograph H. Schnell, "Chemistry and Physics of Polycarbonates". Interscience Publishers, New York, 1964.

In the present context, dihydroxy compounds suitable for the preparation of the polycarbonates useful in the practice of the invention conform to the structural formulae (1) or (2)

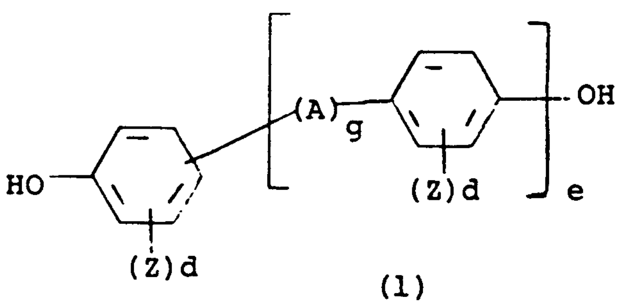

(1)

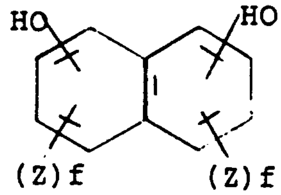

(2)

wherein

A denotes an alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, a carbonyl group, an oxygen atom, a sulfur atom, -SO- or $-SO_2-$ or a radical conforming to

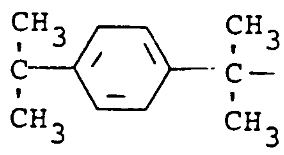 or 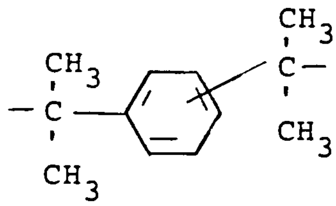

e and g both denote the number 0 to 1;
Z denotes F, Cl, Br or $C_1$-$C_4$-alkyl and if several Z radicals are substituents in one aryl radical, they may be identical or different one from the other;
d denotes an integer of from 0 to 4; and
f denotes an integer of from 0 to 3.

Among the dihydroxy compounds useful in the practice of the invention are hydroquinone, resorcinol, bis-(hydroxyphenyl) alkanes, bis-(hydroxyphenyl) ethers, bis-(hydroxyphenyl)-ketones, bis-(hydroxyphenyl)-sulfoxides, bis-(hydroxyphenyl)-sulfides, bis-(hydroxyphenyl)-sulfones, and α,α',-bis-(hydroxyphenyl)-diisopropyl-benzenes, as well as their nuclear-alkylated compounds. These and further suitable aromatic dihydroxy compounds are described, for example, in U.S. Patents 3,028,356; 2,999,835; 3,148,172; 2,991,273; 3,271,367; and 2,999,846.

Further examples of suitable bisphenols are 2,2,-bis-(4-hydroxyphenyl)-propane (bisphenol A), 2,4-bis-(4-hydroxyphenyl)-2-methyl-butane, 1,1,-bis-(4-hydroxyphenyl)-cyclohexane, α,α'-bis-(4-hydroxyphenyl)-p-diisopropylbenzene, 2,2,-bis-(3-methyl-4-hydroxyphenyl)-propane, 2,2,-bis-(3-chloro-4-hydroxyphenyl)-propane, bis-(3,5-dimethyl-4-hydroxyphenyl)-methane, 2,2,-bis-(3,5-dimethyl-4-hydroxyphenyl)-propane, bis-(3,5-dimethyl-4-hydroxyphenyl)-sulfide, bis-(3,5-dimethyl-4-hydroxyphenyl)-sulfoxide, bis-(3,5-dimethyl-4-hydroxyphenyl)-sulfone, hydroxybenzophenone, 2,4-bis-(3,5-dimethyl-4-hydroxyphenyl)-cyclohexane, α,α'-bis-(3,5-dimethyl-4-hydroxyphenyl)-p-diisopropylbenzene and 4,4'-sulfonyl diphenyl.

Examples of particularly preferred aromatic bisphenols are 2,2-bis-(4-hydroxyphenyl)-propane, 2,2-bis-(3,5-dimethyl-4-hydroxyphenyl)-propane and 1,1,-bis-(4-hydroxyphenyl)-cyclohexane.

The most preferred bisphenol is 2,2,-bis-(4-hydroxyphenyl)-propane (bisphenol A).

The polycarbonates of the invention may entail in their structure units derived from one or more of the suitable bisphenols.

Among the resins suitable in the practice of the invention are included phenolphthalein-based polycarbonate, copolycarbonates and terpolycarbonates such as are described in U.S Patents 3,036,036 and 4,210,741. The polycarbonates useful in the practice of the invention may also be branched by condensing therein small quantities, e.g., 0.05-2.0 mol % (relative to the bisphenols) of polyhydroxyl compound. Polycarbonates of this type have been described, for example, in German Offenlegungsschriften 1,570,533; 2,116,974 and 2,113,374; British Patents 885,442 and 1,079,821 and U.S. Patent 3,544,514. The following are some examples of polyhydroxyl compounds which may be used for this purpose: phloroglucinol; 4,6-dimethyl-2,4,6-tri-(4-hydroxyphenyl)-heptane; 1,3,5-tri-(4-hydroxyphenyl)-benzene; 1,1,1-tri-(4-hydroxyphenyl)-ethane; tri-(4-hydroxyphenyl)-phenylmethane; 2,2,-bis-[4,4-(4,4'-dihydroxydiphenyl)-cyclohexyl]-propane; 2,4-bis-(4-hydroxy-1-isopropylidine)-phenol; 2,6-bis-(2'-dihydroxy-5'-methylbenzyl)-4-methylphenol; 2,4-dihydroxy-benzoic acid; 2-(4-hydroxyphenyl)-2-(2,4-dihydroxyphenyl)-propane and 1,4-bis-(4,4'-dihydroxytriphenylmethyl)-benzene. Some of the other polyfunctional compounds are 2,4-dihydroxybenzoic acid, trimesic acid, cyanuric chloride and 3,3-bis-(4-hydroxyphenyl)-2-oxo-2,3-dihydroindole.

In addition to the polycondensation process mentioned above, other processes for the preparation of the polycarbonates of the invention are polycondensation in a homogeneous phase and transesterification. The suitable processes are disclosed in the U.S. Patents 3,028,365; 2,999,846; 3,153,008; and 2,991,273.

The preferred process for the preparation of polycarbonates is the interfacial polycondensation process.

Other methods of synthesis in forming the polycarbonates of the invention such as disclosed in U.S. Patent 3,912,688, may be used.

Suitable polycarbonate resins are available in commerce, for instance, under the tradenames Makrolon FCR, Makrolon 2600, Makrolon 2800 and Makrolon 3100, all of which are bisphenol A based homopolycarbonate resins differing in terms of their respective molecular weights and characterized in that their melt flow indices (MFR) per ASTM D-1238 are about 16.5-24, 13-16, 7.5-13.0 and 3.5-6.5 gm/10 min., respectively. These are products of Mobay Corporation of Pittsburgh, Pennsylvania.

The stabilization agent in accordance with the present invention is a monomeric or a polymeric compound conforming structurally to

I. 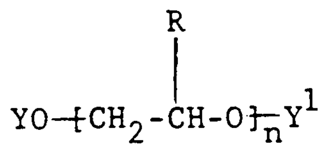 or to

II. $YO-[(CH_2)_m-O]_n-Y^1$

wherein R is a hydrogen or a halogen atom or a $C_1$-$C_{10}$ alkyl, a $C_6$-$C_{10}$ aryl, $C_6$-$C_{18}$ alkylaryl or a $C_4$-$C_{10}$ cycloalkyl, radical, n is an integer of at least 1 and preferably 1 to about 100 and in I Y and $Y^1$ are independently III, IV, V or VI hereafter defined, and in II Y and $Y^1$ independently are a hydrogen atom, a $C_6$-$C_{10}$ aryl, $C_1$-$C_{10}$ alkyl or a $C_6$-$C_{18}$ alkylaryl or a $C_6$-$C_{18}$ arylalkyl radical or

III. 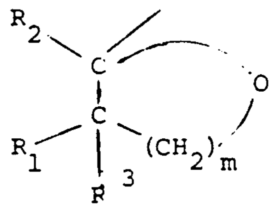

or

IV. 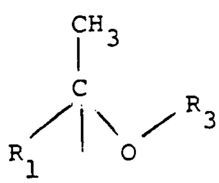

or

V. 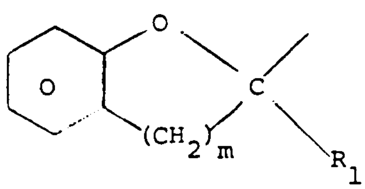

or

VI. 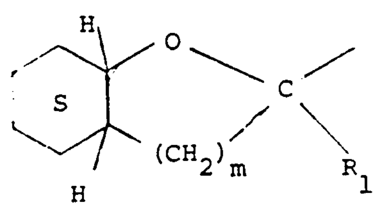

wherein m is 1 or 3-6 and $R_1$, $R_2$ and $R_3$ independently are a hydrogen atom or a $C_1$-$C_{10}$ alkyl, $C_6$-$C_{10}$ aryl or a $C_6$-$C_{18}$ alkylaryl radical,

A preferred stabilizing agent conforms to

Ia. 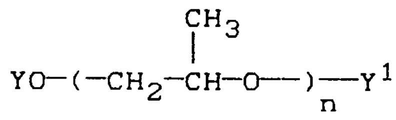

wherein n is about 10 to about 60 and wherein Y and $Y^1$ are identical and denote an end-blocking group conforming to formula III or IV.

The stabilizing agents of the invention conforming to the embodiments where Y and $Y^1$ are hydrogen atoms are commercially available compounds, for instance, under the tradename Multranol from Mobay Corporation. The preparation of the preferred, end-blocked embodiment is demonstrated below Among the more preferred embodiments of the stabilizing agent are the compounds of formula Ia wherein Y and $Y^1$ denote end blocking groups derived from ethyl vinyl ether, or dihydropyran.

The preferred end blocked stabilizer of the invention offers certain advantages over its unblocked counterpart - the embodiment where Y's are hydrogen atoms - since it is inert. A comparison of the optical properties of polycarbonate compositions containing these stabilizers shows that the end-blocked embodiment is more effective than its counterpart at high molding temperatures. The table below summarize the comparison between compositions each containing 1% of a stabilizer. In Comparison-Composition 1 the stabilizer conforms structurally to:

VII. 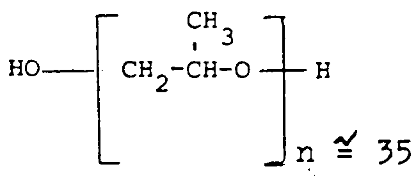

and in Composition 2 the stabilizer was

VIII. 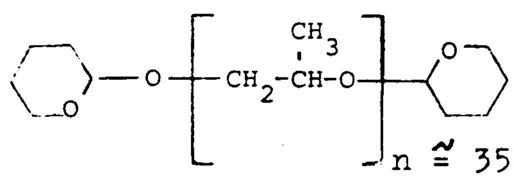

The polycarbonate resin was Makrolon M-40 (MFR 6-11.9 gm/10 min)

| | Melt Temperature | |
|---|---|---|
| Composition 1 (Comparison) | 288 °C | 343 °C |
| Yellowness Index | 3.13 | 2.27 |
| Haze, % | 2.64 | 1.14 |
| Total light transmission | 81.83 | 88.59 |
| Composition 2 | | |
| Yellowness Index | 2.71 | 2.47 |
| Haze, % | 0.66 | 0.73 |
| Total light transmission | 88.92 | 88.98 |

An additional comparison including the corresponding values for the unstabilized polycarbonate resins is shown below.

| Composition | Melt Temperature | |
|---|---|---|
| | 288° C | 343° C |
| Makrolon 2800 | | |
| Yellowness Index | 3.98 | 4.63 |
| Haze, % | 0.99 | 1.35 |
| Total Light Transmission, % | 88.0 | 87.6 |
| Composition 1 (Comparison) | | |
| Yellowness Index | 2.76 | 2.99 |
| Haze, % | 0.69 | 0.97 |
| Total Light Transmission, % | 88.8 | 88.7 |
| Composition 2 | | |
| Yellowness Index | 2.74 | 3.00 |
| Haze, % | 0.67 | 1.07 |
| Total Light Transmission, % | 88.5 | 88.6 |

The preparation of the preferred dihydropyran end-capped stabilizer is shown schematically as

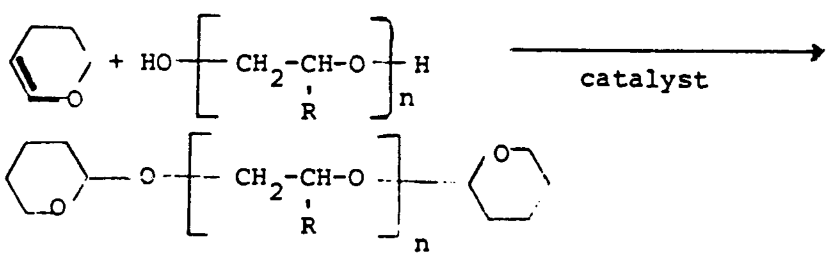


where R is as defined for Formula I and II above and where the catalyst is a Lewis acid such as toluene sulfonic acid, HCl or a benzene sulfonic acid.

The invention is further illustrated by the following examples in which all parts and percentages are by weight unless otherwise specified.

EXAMPLES

EXAMPLE 1 Preparation of a DHP end-blocked stabilizer.

A polyether conforming structurally to Formula VII above (300 grams) was dissolved in 400 ml of tetrahydrofuran in a 100 ml three-necked flask. 0.25 grams of p-toluene sulfonic acid - a catalyst - was then added and the mixture stirred. After complete dissolution there was slowly added dihydropyran (26.4 g). A 5 degree exotherm occurred, raising the final temperature to about 60° C. The temperature was then raised to reflux for 8 additional hours. Afterward an appropriate amount of triethylamine was added to the solution to remove excess acid. The solution was then filtered and vacuum distilled to remove any unreacted dihydropyran and tetrahydrofuran from the product.

ExAMPLE 2

Compositions of the invention containing the end-blocked stabilizers prepared in accordance with Example 1 above were evaluated as to their optical properties both before and after exposure to gamma radiation. The Tables below summarizes the results of the evaluation and includes a comparison between compositions containing no stabilizer and composition containing 0.5% and 1% of the stabilizer. In Table 1 the polycarbonate resin was Makrolon FCR and in Table 2 the resin was Makrolon 2800 which is a bisphenol-A based homopolymer having a melt flow index of about 6- 11.9 gm/10 min.

TABLE I

| Composition | Melt Temp. (°C) | Radiation Dose (Mega Rads) | % Light Transmission(2) | Haze %(4) | YI(2) | ΔYI(3) |
|---|---|---|---|---|---|---|
| Makrolon FCR(1) | 288°C | 0.0 | 87.26 | 2.31 | 4.07 | ---- |
| | | 2.5 | 85.26 | 2.54 | 12.10 | 8.03 |
| | | 5.0 | 84.09 | 2.17 | 16.89 | 12.82 |
| | 343°C | 0.0 | 86.87 | 2.56 | 4.17 | --- |
| | | 2.5 | 85.28 | 2.63 | 10.35 | 6.18 |
| | | 5.0 | 84.65 | 2.32 | 13.98 | 9.81 |
| 0.5% Additive of | 288°C | 0.0 | 88.48 | 1.23 | 3.09 | --- |
| DHP end blocked | | 2.5 | 87.34 | 1.45 | 8.17 | 5.07 |
| stabilizer | | 5.0 | 86.90 | 1.10 | 11.05 | 7.96 |
| in Makrolon FCR | 343°C | 0.0 | 88.53 | 1.15 | 3.34 | --- |
| | | 2.5 | 87.52 | 1.10 | 7.68 | 4.34 |
| | | 5.0 | 87.04 | 1.10 | 10.84 | 7.50 |

TABLE I-Continued

| Composition | Melt Temp (°C) | Radiation Dose (Mega Rads) | % Light Transmission(2) | Haze %(4) | YI(2) | ΔYI(3) |
|---|---|---|---|---|---|---|
| 0.5% Additive | 371°C | 0.0 | 87.98 | 1.74 | 4.12 | --- |
| of DHP end blocked | | 2.5 | 86.27 | 2.59 | 8.37 | 4.24 |
| stabilizer | | | | | | |
| in Makrolon FCR | | 5.0 | 86.69 | 1.88 | 10.53 | 6.41 |
| 1.0% Additive of | 288°C | 0.0 | 88.63 | 0.95 | 2.32 | --- |
| of DHP end blocked | | 2.5 | 87.54 | 1.67 | 7.30 | 4.98 |
| stabilizer | | 5.0 | 87.35 | 1.48 | 10.16 | 7.84 |
| in Makrolon FCR | | | | | | |
| | 343°C | 0.0 | 88.58 | 1.10 | 3.46 | --- |
| | | 2.5 | 87.57 | 1.54 | 6.64 | 3.19 |
| | | 5.0 | 87.50 | 1.54 | 8.69 | 5.23 |
| | 371°C | 0.0 | 84.51 | 5.04 | 4.59 | --- |
| | | 2.5 | 83.57 | 5.52 | 7.28 | 2.69 |
| | | 5.0 | 79.14 | 10.44 | 9.76 | 5.17 |

(1) Makrolon FCR, a homopolycarbonate based on bisphenol A characterized in that its melt flow index is about 16.5-24 gm/10 min.

(2) Per ASTM D-1925

(3) Difference in yellowness index in comparison with the unradiated sample.

(4) Per ASTM D-1003

TABLE II

| Composition | Melt Temp. (°C) | Radiation Dose (Megarads) | % Light Transmission | Haze % | YI | ΔYI |
|---|---|---|---|---|---|---|
| Makrolon 2800 | 288°C | 0.0 | 88.0 | 0.99 | 3.98 | -- |
| | | 2.5 | 86.4 | 1.67 | 7.86 | 3.88 |
| | | 5.0 | 85.3 | 1.50 | 12.30 | 8.32 |
| | 343°C | 0.0 | 87.6 | 1.35 | 4.63 | -- |
| | | 2.5 | 86.5 | 1.06 | 6.90 | 2.27 |
| | | 5.0 | 85.5 | 0.93 | 12.00 | 7.37 |
| Makrolon 2800 | 288°C | 0.0 | 87.8 | 1.51 | 2.99 | -- |
| containing | | 2.5 | 87.1 | 1.52 | 5.99 | 3.00 |
| 0.5% of DHP | | 5.0 | 86.7 | 1.31 | 8.59 | 5.60 |
| end blocked | 343°C | 0.0 | 88.7 | 1.07 | 3.06 | -- |
| stabilizer | | 2.5 | 87.2 | 0.98 | 5.43 | 2.37 |
| | | 5.0 | 86.6 | 1.37 | 8.20 | 5.14 |
| Makrolon 2800 | 288°C | 0.0 | 88.5 | 0.69 | 2.99 | -- |
| containing | | 2.5 | 87.6 | 1.52 | 3.99 | 1.00 |
| 1.0% of DHP | | 5.0 | 87.0 | 1.31 | 7.62 | 4.63 |
| end blcoked | 343°C | 0.0 | 88.6 | 1.07 | 3.00 | -- |
| stabilizer | | 2.5 | 87.8 | 0.68 | 5.30 | 2.30 |
| | | 5.0 | 87.1 | 0.68 | 6.98 | 3.98 |

The compositions of the invention may be prepared by following conventional procedures for the preparation of polycarbonate molding compositions. The stabilizing agent may be introduced by directly mixing it with the polycarbonate. Other conventional additives may also be incorporated in the composition for their art-recognized utility. These include release agents, plasticizers, stabilizers, antioxidants, fillers, reinforcements and the like.

## Claims

1. A polycarbonate molding composition comprising
   (i) an aromatic polycarbonate resin and
   (ii) a stabilizing agent selected from the group consisting of

I. 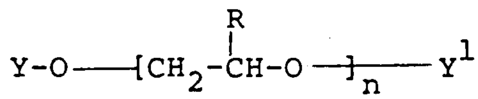

and

II. 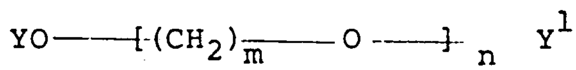

wherein R is a hydrogen or a halogen atom or a $C_1$-$C_{10}$ alkyl, $C_6$-$C_{10}$ aryl, $C_6$-$C_{18}$ arylalkyl or a $C_4$-$C_{10}$ cycloalkyl radical, in I Y and $Y^1$ are independently III, IV, V or VI hereafter defined, and in II Y and $Y^1$ are independently a hydrogen atom, a $C_1$-$C_{10}$ alkyl, $C_6$-$C_{10}$ aryl or $C_6$-$C_{18}$ arylalkyl radical or

III. 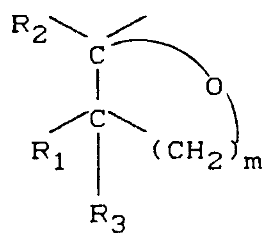

IV. 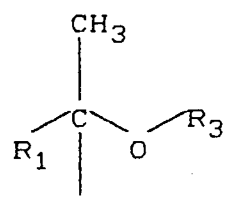

or

V. 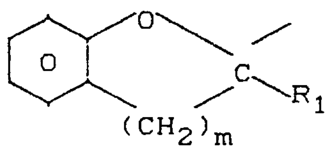 or VI. 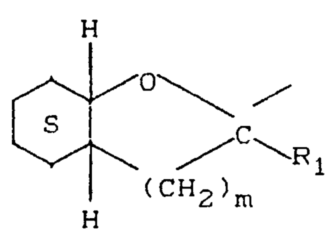

wherein m is 1 or 3-6, $R_1$, $R_2$ and $R_3$ independently are a hydrogen atom or a $C_1$-$C_{10}$ alkyl, $C_6$-$C_{10}$ aryl or a $C_6$-$C_{18}$ arylalkyl radical and n is 1 to 100, said (ii) being present in sufficient amount to enhance the resistance of said resin to the deterioration of its optical properties upon exposure to gamma radiation

2. The composition of Claim 1 wherein said sufficient amount is 0.1 to 10 percent relative to the weight of the composition.

**3.** The composition of Claim 1 wherein said (ii) conforms to

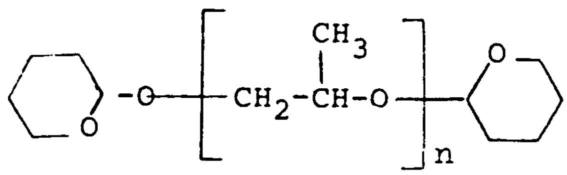

wherein n ≅ 35

**4.** The composition of Claim 1 wherein said polycarbonate is a homopolymer based on bisphenol A.

**Patentansprüche**

**1.** Polycarbonat-Formmasse, umfassend
(i) ein aromatisches Polycarbonat-Harz und
(ii) ein Stabilisierungsmittel, das aus der aus

I. 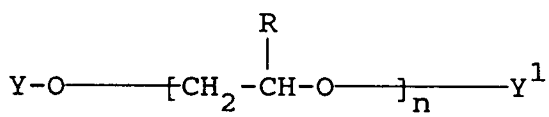

und

II. 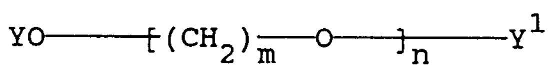

bestehenden Gruppe ausgewählt ist, worin

| | |
|---|---|
| R | ein Wasserstoff-Atom oder ein Halogen-Atom oder ein $C_1$-$C_{10}$-Alkyl-, $C_6$-$C_{10}$-Aryl-, $C_6$-$C_{18}$-Arylalkyl- oder $C_4$-$C_{10}$-Cycloalkyl-Rest ist, |
| in I | Y und $Y^1$ unabhängig III, IV, V oder VI gemäß der nachfolgenden Definition ist und |
| in II | Y und $Y^1$ unabhängig ein Wasserstoff-Atom, ein $C_1$-$C_{10}$-Alkyl-, $C_6$-$C_{10}$-Aryl- oder $C_6$-$C_{18}$-Arylalkyl-Rest oder |

III.

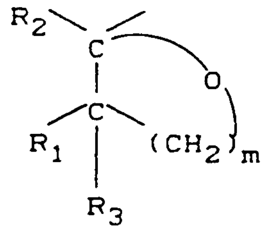

IV.

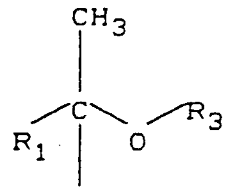

oder

V.

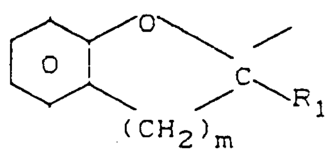

oder

VI.

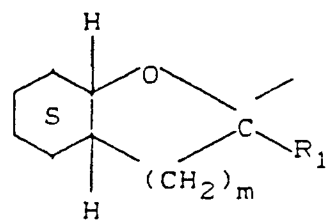

ist, worin

m 1 oder 3 bis 6 ist,

$R_1$, $R_2$ und $R_3$ unabhängig ein Wasserstoff-Atom, ein $C_1$-$C_{10}$-Alkyl-, $C_6$-$C_{10}$-Aryl- oder $C_6$-$C_{18}$-Arylalkyl-Rest ist und

n 1 bis 100 ist,

worin (ii) in genügender Menge vorhanden ist, um die Beständigkeit des Harzes gegenüber einer Verschlechterung der optischen Eigenschaften desselben aufgrund der Einwirkung von gamma-Strahlung zu erhöhen.

**2.** Masse nach Anspruch 1, worin die genügende Menge 0,1 bis 10 %, bezogen auf das Gewicht der Masse, beträgt.

**3.** Masse nach Anspruch 1, worin (ii)

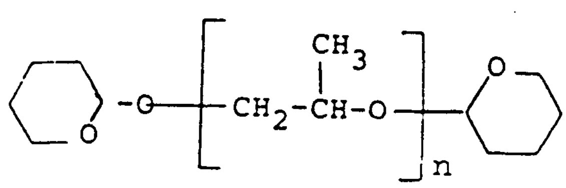

entspricht, worin n ≈ 35.

**4.** Masse nach Anspruch 1, worin das Polycarbonat ein Homopolymer auf der Basis von Bisphenol A ist.

**Revendications**

**1.** Composition à mouler à base de polycarbonate, comprenant

(i) une résine de polycarbonate aromatique et

(ii) un agent stabilisant choisi dans le groupe comprenant

I. 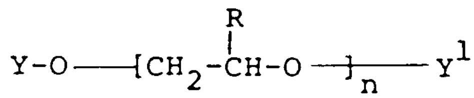

et

II. 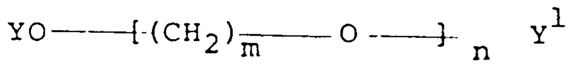

où R est un atome d'hydrogène ou un atome d'halogène ou un radical alkyle en $C_1$ à $C_{10}$, aryle en $C_6$ à $C_{10}$, arylalkyle en $C_6$ à $C_{18}$ ou cycloalkyle en $C_4$ à $C_{10}$, dans I, Y et $Y^1$ représentent indépendamment III, IV, V ou VI définis ci-après et dans II, Y et $Y^1$ représentent indépendamment un atome d'hydrogène, un radical alkyle en $C_1$ à $C_{10}$, aryle en $C_6$ à $C_{10}$, ou arylalkyle en $C_6$ à $C_{18}$ ou

III. 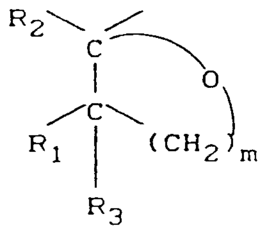

IV. 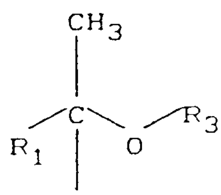

ou

V. 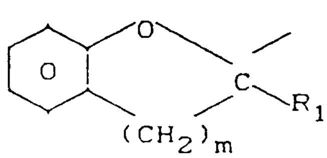

or
ou

VI. 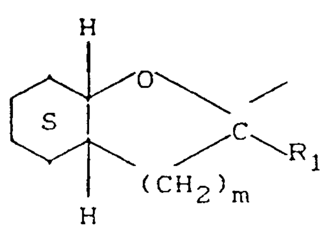

formules dans lesquelles m a la valeur 1 ou une valeur de 3 à 6, $R_1$, $R_2$ et $R_3$ représentent indépendamment un atome d'hydrogène ou un radical alkyle en $C_1$ à $C_{10}$, aryle en $C_6$ à $C_{10}$ ou arylalkyle en $C_6$ à $C_{18}$ et n a une valeur de 1 à 100, l'agent (ii) étant présent en une quantité suffisante pour améliorer la résistance de ladite résine à la détérioration de ses propriétés optiques par exposition à des rayons gamma.

2. Composition suivant la revendication 1, dans laquelle ladite quantité suffisante est de 0,1 à 10 % par rapport au poids de la composition.

3. Composition suivant la revendication 1, dans laquelle l'agent (ii) répond à la formule

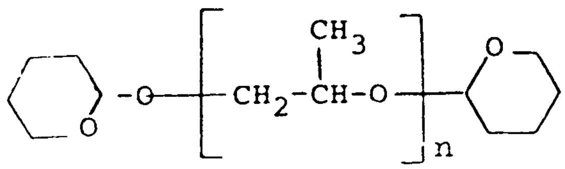

dans laquelle n ≅ 35

**4.** Composition suivant la revendication 1, dans laquelle le polycarbonate est un homopolymère à base de bisphénol A.